(19) Europäisches Patentamt
European Patent Office
Office européen des brevets

(11) Veröffentlichungsnummer: **0 150 287**
**A1**

(12) **EUROPÄISCHE PATENTANMELDUNG**

(21) Anmeldenummer: **84113614.6**

(22) Anmeldetag: **12.11.84**

(51) Int. Cl.[4]: **C 08 G 79/02**, C 07 F 9/44

(30) Priorität: **25.11.83 DE 3342637**

(43) Veröffentlichungstag der Anmeldung: **07.08.85 Patentblatt 85/32**

(84) Benannte Vertragsstaaten: **DE FR GB IT**

(71) Anmelder: **BAYER AG, Konzernverwaltung RP Patentabteilung, D-5090 Leverkusen 1 Bayerwerk (DE)**

(72) Erfinder: **Kauth, Hermann, Dr., Kolpingstrasse 34, D-4150 Krefeld (DE)**
Erfinder: **Schmidt, Manfred, Dr., Bodelschwinghstrasse 20, D-4150 Krefeld (DE)**
Erfinder: **Freitag, Dieter, Dr., Hasenheide 10, D-4150 Krefeld (DE)**
Erfinder: **Rudolph, Udo, Dr., Scheiblerstrasse 101, D-4150 Krefeld (DE)**
Erfinder: **Kleiner, Frank, Dr., Am Sonnenhang 62, D-6090 Leverkusen 3 (DE)**

(54) **Verfahren zur Herstellung von Polyphosphonsäureamiden.**

(57) Die Erfindung betrifft ein Verfahren zur Herstellung von Polyphosphonsäureamiden durch Kondensation von 0.5–2 Mol eines Phosphonsäurediarylesters und 1 Mol eines alipnatischen, aromatischen, araliphatischen oder heterocyclischen primären oder sekundären Diamins in der Schmelze bei 50–350°C unter Abspaltung des entsprechenden Phenols, gegebenenfalls in Gegenwart eines die Kondensation beschleunigenden Katalysators und unter Inertgasatmosphäre.

EP 0 150 287 A1

BAYER AKTIENGESELLSCHAFT 5090 Leverkusen, Bayerwerk
Konzernverwaltung RP
Patentabteilung Fr/bo

## Verfahren zur Herstellung von Polyphosphonsäureamiden

Die vorliegende Erfindung betrifft ein Verfahren zur Herstellung von Polyphosphonsäureamiden.

Es ist bereits bekannt, aus Dialkylamino-phosphonsäureamiden und Alkyl- bzw. Arylpolyaminen Polymere herzustellen (vgl. z.B. US-PS 3 546 141). Die Umsetzung von Phosphonsäuredichloriden mit Diaminen ist ebenfalls beschrieben (vgl. z.B. Harris et al. J. Polymer Science 35, 540 (1959)). Weiterhin sind Polyphosphonsäureamide zugänglich aus Phosphonsäurebisimidazoliden und Diaminen (vgl. z.B. US-PS 3 244 647). Nachteilig beim ersten Verfahren ist die Bildung von Halogenwasserstoff bzw. Amin-hydrochlorid, welches nur schwierig abgetrennt werden kann. Auch läßt sich ein Restgehalt an verseifbarem Chlor im Polymer nicht immer verhindern, wodurch wiederum bei der technischen Verarbeitung Korrosion bewirkt wird.

Phosphonsäureimidazolide und -amide sind vergleichsweise aufwendige und teure Ausgangsverbindungen, die erst aus den entsprechenden Phosphonsäuredichloriden synthetisiert werden müssen.

Versuche, Phosphonsäureester mit Diaminen unter Abspaltung der dem Ester zugrundeliegenden Hydroxylkomponente zu Polyphosphonsäureamiden umzusetzen, sind bisher nicht bekannt geworden. M. Sander und E. Steininger führen dazu in J. of Macromolecular Science-Reviews in Macromolecular Chemistry, vol. C 1, No 1 (1967), Seite 128, Zeilen 1 bis 2 aus: Diamine und Phosphonsäureester ergeben keine Polyphosphonsäureamide.

Es wurde nun überraschend gefunden, daß man Polymere mit wiederkehrenden Einheiten der allgemeinen Formel I

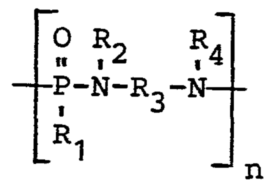

I

herstellen kann, wenn man Diamine der allgemeinen Formel II

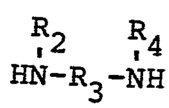

II

und Phosphonsäureester der allgemeinen Formel III

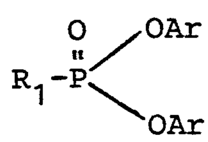

III

wobei in den Formeln I bis III bedeuten:

$R_1$ = $C_1$-$C_6$-Alkyl, $C_6$-$C_{15}$-Aryl, $C_2$-$C_{12}$-Alkenyl, $C_7$-$C_{18}$-Alkylaryl und $C_7$-$C_{18}$-Aralkyl;

$R_3$ = einen oder mehrere Reste, ausgewählt aus

$C_2$-$C_{12}$-Alkylen;

Phenylen 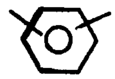 ;

Bisphenylen 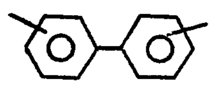 ;

Alkylen-bisphenylen 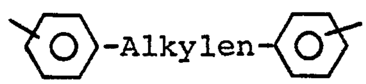 mit

Alkylen = $C_1$-$C_4$-Alkylen,
$C_2$-$C_4$-Alkyliden,
$C_5$-$C_{12}$-Cycloalkylen oder $C_6$-$C_{12}$-Cycloalkyliden;

Thiobisphenylen 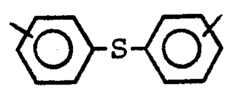 ;

Oxybisphenylen 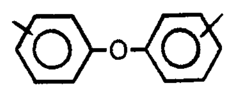 ;

Sulfonyl-bisphenylen 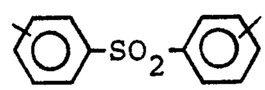 ;

Carbonyl-bisphenylen 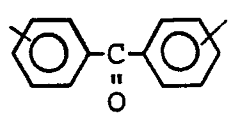 ;

Bis(alkylen)-phenylen

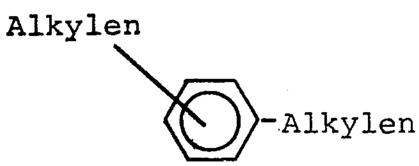 mit 1 - 4 C-Atomen in jeder Alkylengruppe,

wobei jeder der Phenylkerne der $R_1$- und $R_3$-Reste durch 1 - 4 $C_1$-$C_4$-Alkylgruppen, oder 1 - 4 Halogenatome (Cl, Br) oder durch die genannten Alkylgruppen und Halogenatome substituiert sein kann,

$R_2$ = $R_4$ = Wasserstoff oder $C_1$-$C_4$-Alkyl bzw.

$R_2$ und $R_4$ zusammen eine die beiden Stickstoffatome verbindende Alkylengruppe mit 1 - 6 C-Atomen, wobei dann $R_3$ auf Alkylen mit 2 - 6 C-Atomen beschränkt ist;

Ar = Phenyl, Kresyl und

n = 3 - 20,

in der Schmelze bei 50 - 350°C unter Abdestillieren des abgespaltenen Phenols bzw. Kresols kondensiert, wobei pro Mol des Diamins der Formel II 0.5 - 2 Mol des Phosphorsäureesters der Formel III eingesetzt werden und wobei man gegebenenfalls in sauerstofffreier Inertgasatmosphäre und gegebenenfalls in Gegenwart von $10^{-5}$ bis $10^{-1}$ Mol-%, bezogen auf 100 Mol-% Diamin, eines die Kondensation beschleunigenden Katalysators arbeitet.

Vorzugsweise bedeuten in den Formeln I bis III:

$R_1$ = Methyl oder Phenyl, insbesondere Methyl;

$R_2$ und $R_4$ = Wasserstoff; bzw. $R_2$ und $R_4$ zusammen eine $-CH_2-CH_2-$Gruppe, wobei dann $R_3$ auf eine $-CH_2-CH_2-$Gruppe beschränkt ist;

$R_3$ = mindestens einen der Reste

$C_2$-$C_6$-Alkylen;

Phenylen 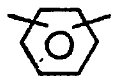 ;

Alkylenbisphenylen 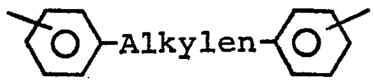 mit

Alkylen = $C_1$-$C_4$-Alkylen, insbesondere $C_1$-$C_2$-Alkylen, $C_2$-$C_4$-Alkyliden, insbesondere Isopropyliden;
Cyclohexylen;
Cyclohexyliden;

Xylylen 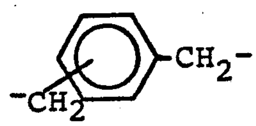

wobei jeder Phenylkern von $R_1$ und $R_3$ durch 1 bis 2 $C_1$-$C_4$-Alkylreste, insbesondere Methyl, substituiert sein kann;

Ar = Phenyl und

n = 3 - 15.

Für das erfindungsgemäße Verfahren können Phosphonsäurediarylester und Diamin im Molverhältnis zwischen 1:2 und 2:1, vorzugsweise im etwa äquimolekularen Verhältnis, eingesetzt werden.

Dabei kann es zweckmäßig sein, die Diaminkomoponente während der Reaktion sukzessive zuzudosieren.

Der Temperaturbereich, in dem das erfindungsgemäße Verfahren durchgeführt wird, hängt stark von der Natur des eingesetzten Diamins ab. Er bewegt sich zwischen 50°C und 350°C, wobei für aliphatische Diamine 100 - 250°C, für aromatische bzw. aromatisch aliphatische 150 - 320°C bevorzugt werden.

Das erfindungsgemäße Verfahren kann mit Vorteil auch unter sauerstofffreier Inertgasatmosphäre, z.B. unter Stickstoff oder Edelgas, vorzugsweise Stickstoff, durchgeführt werden.

Weiter können beim erfindungsgemäßen Verfahren zur Beschleunigung der Kondensation Katalysatoren eingesetzt werden.

Derartige Katalysatoren sind beispielsweise:

Natriumhydrid, Natriumamid, Natriumborhydrid, Natriumalkoholate wie $NaOCH_3$, $NaOC_2H_5$, Natriumphenolat;

Titantetrabutylat, Zinkacetat, Vanadyl-triethylat, Zirkonium-tetrapropylat, Dibutylzinn-diacetat, Dibutylzinndimethylat; p-Toluolsulfonsäure.

Aliphatische Diamine reagieren in der Regel zwar ohne Katalysator, jedoch können Katalysatoren zur Erhöhung der Reaktionsgeschwindigkeit verwendet werden. Im Falle der Verwendung der aromatischen bzw. der aliphatisch-aromatischen Diamine werden bevorzugt basische bzw. stark basische Katalysatoren wie Alkalimetall-Alkoholate, Alkalimetall-Phenolate und Alkalihydride eingesetzt.

Die Mengen an gegebenenfalls eingesetzten Katalysatoren betragen $10^{-5}$ bis $10^{-1}$ Mol-%, vorzugsweise $10^{-4}$ bis $10^{-2}$ Mol-%, bezogen auf 100 Mol-% Diamin.

Bei der Durchführung des erfindungsgemäßen Verfahrens wird theoretisch pro Aminogruppe 1 Mol Phenol bzw. Kresol abgespalten, das bei vermindertem Druck (zuletzt bei ca. 0.5 - 5 mbar) destillativ aus dem Reaktionsgemisch entfernt wird.

Am Ende der Reaktion - erkennbar an der Menge des abgespaltenen Phenols (Kresols) - kann man freie, nicht umgesetzte Aminoendgruppen maskieren, indem man mit mindestens einer den Aminoendgruppen äquivalenten Menge einer aus den folgenden Klassen ausgewählten Substanz in bekannter Weise umsetzt:

Monocarbonsäurechloride wie z.B. Acetylchlorid, Benzoylchlorid,

Carbonsäureanhydride wie z.B. Phthalsäureanhydrid, Maleinsäureanhydrid,

Monoisocyanate wie z.B. Phenyl-, Benzyl-, Naphthyl-, Stearylisocyanat,

Carbonate wie z.B. Diphenylcarbonat, Diethylcarbonat.

Aminolysierbare Polymere wie z.B. Polybutylenterephthalat, Polyethylenterephthalat, Polycarbonat sind für die Umsetzung nicht abreagierter Aminoendgruppen ebenfalls geeignet. Vorzugsweise werden Monoisocyanate oder Carbonsäureanhydride eingesetzt.

Zur Isolierung wird das viskose Polyphosphonsäureamid aus dem Reaktionskessel abgelassen und mittels geeigneter Apparate wie z.B. Kühlwalzen, Mühlen, Granulatoren etc. zu Partikeln von technisch handhabbaren Korngrößen zerkleinert.

Die erfindungsgemäß erhaltenen Polyphosphonsäureamide können als flammhemmende Zusätze für Fasern, Kunstofformkörper, Folien und Überzüge eingesetzt werden.

Die in den Beispielen angegebenen Prozente beziehen sich auf das Gewicht, sofern nicht anders vermerkt.

0150287

Beispiel 1

7440 g (30 Mol) Methanphosphonsäurediphenylester
4080 g (30 Mol) m-Xylylendiamin und
0,3 g (7,7 . $10^{-3}$ Mol) Natriumamid

werden unter Stickstoff bei 220°C intensiv in einem Autoklaven vermischt. Man rührt bei dieser Temperatur 2 h unter Normaldruck und destilliert dann bei einem von 350 auf 100 mbar absinkenden Vakuum und einer auf 240°C ansteigenden Temperatur Phenol über eine auf 130°C beheizte Kolonne während 3 h ab. Anschließend wird die Reaktion 4 h bei 240°C und einem allmählich auf ∿1 mbar sinkendem Druck fortgesetzt. Man belüftet mit Stickstoff, läßt das Produkt absitzen und isoliert es durch Ablassen und Zerkleinerung über eine Kühlwalze. Das Polyphosphonsäureamid ist löslich in Methanol, Kresol, Eisessig und Dimethylsulfoxid, dagegen unlöslich in Methylenchlorid und besitzt folgende Eigenschaften:

Viskosität $\eta_{rel}$ = 1,14 (1 g Substanz pro 100 ml Lösung; Lösungsmittel m-Kresol)

Glasübergangstemperatur $T_g$ = 78°C

Durchschnittliches Molekulargewicht (Zahlenmittel)
$\overline{MG}_{osm.}$ = 1500

Ausbeute: 5700 g.

Das IR-Spektrum des erhaltenen Polyphosphonsäureamids ist praktisch identisch mit einem Polyphosphonsäureamid, hergestellt aus 1 Mol Methanphosphonsäuredichlorid und 1 Mol m-Xylylendiamin.

Beispiel 2

Zu 191 g (0,77 Mol) Methanphosphonsäurediphenylester werden während 2,5 h 138,6 g (0,7 Mol) 4,4'-Diaminodiphenylmethan bei 240°C und 140 mbar zugetropft. Die Reaktion wird mit 50 mg ($1,3 \cdot 10^{-3}$ Mol) Natriumamid katalysiert. Während des Zutropfens wird Phenol über eine auf 130°C beheizte Kolonne abdestilliert. Danach wird die Reaktion 9 h bei einer Temperatur von 240°C und einem allmählich auf 5 mbar absinkenden Vakuum fortgesetzt.

Bei 1 mbar destilliert man nicht umgesetzte Monomere ohne Kolonne ab und erhält ein Polyphosphonsäureamid, das in Methanol, Kresol, Dimethylformamid, Eisessig und Dimethylsulfoxid löslich, in Wasser, Methylenchlorid dagegen unlöslich ist und folgende Eigenschaften besitzt:

Aminoendgruppen: 1.2 %

Viskosität $\eta_{rel}$ = 1,09 (1 g Substanz pro 100 ml Lösung; Lösungsmittel: m-Kresol)

Glasübergangstemperatur $T_g$ = 110°C

Durchschnittliches Molekulargewicht (Zahlenmittel)
$\overline{MG}_{osm.}$ = 800

Ausbeute: 185 g

Das IR-Spektrum des so hergestellten Produktes ist weitestgehend identisch mit demjenigen, das das Umsetzungsprodukt von 0,1 Mol 4,4'-Diaminodiphenylmethan mit 0,11 Mol Methanphosphonsäuredichlorid liefert.

Beispiel 3

136 g (1 Mol) m-Xylylendiamin und
248 g (1 Mol) Methanphosphonsäurediphenylester

werden ohne Natriumamid als Katalysator analog der in Beispiel 1 geschilderten Verfahrensweise einer Schmelzkondensation unterworfen. Man erhält ein Polyphosphonsäureamid mit folgenden Eigenschaften:

Viskosität $\eta_{rel}$ = 1,15 (1 g Substanz pro 100 ml Lösung; Lösungsmittel: m-Kresol)

Glasübergangstemperatur $T_g$ = 93°C

Durchschnittliches Molekulargewicht (Zahlenmittel)
$\overline{MG}_{osm.}$ = 1800

Ausbeute: 150 g.

Das IR-Spektrum des erhaltenen Polyphosphonsäureamids ist weitestgehend identisch mit demjenigen, das das Umsetzungsprodukt von 0,1 Mol Xylylendiamin mit 0,1 Mol Methanphosphonsäuredichlorid liefert.

## Beispiel 4

190,4 g (1,4 Mol) m-Xylylendiamin
173,6 g (0,7 Mol) Methanphosphonsäurediphenylester

werden ohne Natriumamid als Katalysator unter Stickstoff bei 220°C zwei Stunden gerührt. Danach destilliert man bei 240°C und einem auf 20 mbar absinkenden Vakuum während 9 h und anschließend im Hochvakuum bei ca. 3 mbar ein Gemisch aus Xylylendiamin und Phenol ab.

Man erhält 176 g eines Polymers mit folgenden Eigenschaften:

Viskosität $\eta_{rel}$ = 1.22 (1 g Substanz pro 100 ml Lösung, Lösungsmittel: m-Kresol)

Glasübergangstemperatur $T_g$ = 88°C

Durchschnittliches Molekulargewicht (Zahlenmittel) $\overline{MG}_{osm.}$ = 2.300

## Beispiel 5

Zu 248 g (1 Mol) Methanphosphonsäurediphenylester werden

während einer Stunde 99 g (0,5 Mol) 4,4'-Diaminodiphenylmethan bei 240°C und 150 mbar zugetropft. Die Reaktion wird mit 50 mg $NaNH_2$ katalysiert. Während des Zutropfens wird Phenol über eine Kolonne abdestilliert. Danach wird die Reaktion 6 h bei einer Temperatur von 240°C und einem auf ca. 1 mbar absinkenden Vakuum fortgesetzt. Man entfernt die Kolonne, und destilliert nicht umgesetzten Ausgangsester ab, und erhält 185 g eines Oligomers mit folgenden Eigenschaften:

Aminoendgruppen: 0.3 %

Viskosität $\eta_{rel}$ = 1.1 (1 g Substanz pro 100 ml Lösung, Lösungsmittel: m-Kresol)

Glasübergangstemperatur $T_g$ = 120°C

Durchschnittliches Molekulargewicht (Zahlenmittel)
$\overline{MG}_{osm.}$ = 950

Das folgende Vergleichsbeispiel zeigt, daß Phosphonsäuredialkylester und aromatische Diamine nicht unter Abspaltung von Alkohol reagieren, woraus geschlossen werden darf, daß keine Polyphosphonsäureamidbildung erfolgt.

<u>Vergleichsbeispiel</u>

0,5 Mol (62 g) Methanphosphonsäuredimethylester und
0,5 Mol (99 g) 4,4'-Diaminodiphenylmethan

werden unter Stickstoff zusammengegeben und langsam auf 150 bis 170°C erhitzt. Hierbei erfolgt eine exotherme Reaktion. Durch anschließende Destillation erhält man ein Substanzgemisch, das praktisch kein Methanol enthält, das vielmehr auf eine Umwandlung des 4,4'-Diaminodiphenylmethans hindeutet.

Patentansprüche

1. Verfahren zur Herstellung von Polymeren mit wiederkehrenden Einheiten der allgemeinen Formel I

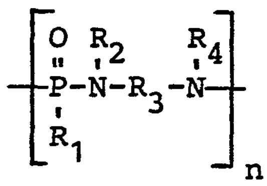

I

dadurch gekennzeichnet, daß man Diamine der allgemeinen Formel II

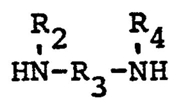

II

und Phosphonsäureester der allgemeinen Formel III

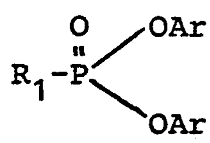

III

wobei in den Formeln I bis III bedeuten:

$R_1$ = $C_1$-$C_6$-Alkyl, $C_6$-$C_{15}$-Aryl, $C_2$-$C_{12}$-Alkenyl, $C_7$-$C_{18}$-Alkylaryl und $C_7$-$C_{18}$-Aralkyl;

$R_3$= einen oder mehrere Reste, ausgewählt aus $C_2$-$C_{12}$-Alkylen;

Phenylen 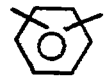 ;

Bisphenylen 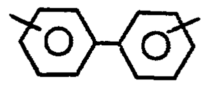 ;

Alkylen-bisphenylen 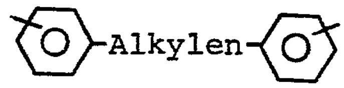 mit

Alkylen = $C_1$-$C_4$-Alkylen,
$C_2$-$C_4$-Alkyliden,
$C_5$-$C_{12}$-Cycloalkylen oder $C_6$-$C_{12}$-Cycloalkliden;

Thiobisphenylen 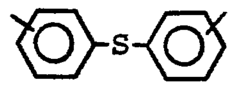 ;

Oxybisphenylen 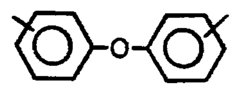 ;

Sulfonyl-bisphenylen 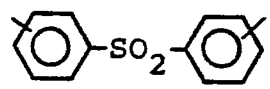 ;

Carbonyl-bisphenylen 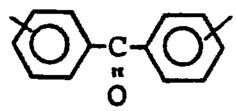 ;

Bis(alkylen)-phenylen

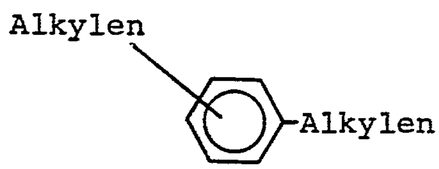

mit 1 - 4 C-Atomen in jeder Alkylengruppe,

wobei jeder der Phenylkerne der $R_1$- und $R_3$-Reste durch 1 - 4 $C_1$-$C_4$-Alkylgruppen, oder 1 - 4 Halogenatome (Cl, Br) oder durch die genannten Alkylgruppen und Halogenatome substituiert sein kann,

$R_2$ = $R_4$ = Wasserstoff oder $C_1$-$C_4$-Alkyl bzw.

$R_2$ und $R_4$ zusammen eine die beiden Stickstoffatome verbindende Alkylengruppe mit 1 - 6 C-Atomen, wobei dann $R_3$ auf Alkylen mit 2 - 6 C-Atomen beschränkt ist;

Ar = Phenyl, Kresyl und

n = 3 - 20,

in der Schmelze bei 50 - 350 °C unter Abdestillieren des abgespaltenen Phenols bzw. Kresols kondensiert, wobei pro Mol des Diamins der Formel II 0.5 - 2 Mol des Phosphonsäureesters der Formel III eingesetzt werden und wobei man gegebenenfalls in sauerstofffreier Inertgasatmosphäre und gegebenenfalls in Gegenwart von $10^{-5}$ bis $10^{-1}$ Mol-%, bezogen auf 100 Mol-% Diamin, eines die Kondensation beschleunigenden Katalysators arbeitet.

2. Verfahren gemäß Anspruch 1, dadurch gekennzeichnet, daß in Formel III $R_1$ Methyl und Ar Phenyl bedeuten.

3. Verfahren gemäß Anspruch 1, dadurch gekennzeichnet, daß als Katalysator ein basischer Katalysator eingesetzt wird.

Europäisches Patentamt

# EUROPÄISCHER RECHERCHENBERICHT

0150287

Nummer der Anmeldung

EP 84 11 3614

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 152 373 (M. HONIG et al.)<br>* Patentansprüche; Spalte 8, Zeilen 18-21; Beispiele 15-24 *<br>--- | 1-3 | C 08 G 79/02<br>C 07 F 9/44 |
| X | US-A-3 450 677 (R. McCONNELL et al.)<br>* Spalte 2, Zeilen 22-56 *<br>--- | 1-3 | |
| Y | US-A-4 403 075 (N. BYRD et al.)<br>* Patentansprüche; Beispiel 2 *<br>--- | 1-3 | |
| Y | FR-A-1 167 050 (OPCIA)<br>* Beispiel 4 *<br>----- | 1-3 | RECHERCHIERTE SACHGEBIETE (Int. Cl.4)<br>C 08 G<br>C 07 F |

Der vorliegende Recherchenbericht wurde für alle Patentansprüche erstellt.

| Recherchenort | Abschlußdatum der Recherche | Prüfer |
|---|---|---|
| DEN HAAG | 11-03-1985 | DERAEDT |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument